# FASCICULE DE BREVET EUROPEEN

(11) **EP 4 025 540 B1**
(45) Date de publication et mention de la délivrance du brevet: **09.08.2023**
(21) Numéro de dépôt: 20761868.7
(22) Date de dépôt: 02.09.2020
(51) Int. Cl.: C03B 9/38, G01K 1/024

(54) **DISPOSITIF DE TRANSMISSION SANS FIL DE MESURES RÉALISÉES PAR UNE SONDE THERMIQUE**
VORRICHTUNG ZUR DRAHTLOSEN ÜBERTRAGUNG VON MESSWERTEN EINES TEMPERATURSENSORS
DEVICE FOR WIRELESSLY TRANSMITTING MEASUREMENTS TAKEN BY A TEMPERATURE SENSOR

(30) Priorité: 04.09.2019 FR 1909722
(43) Date de publication de la demande: 13.07.2022
(73) Titulaire: Konatic, 69390 Vourles (FR)
(72) Inventeur: BATHELET, Guillaume, 69390 VOURLES (FR)
(74) Mandataire: Jacobacci Coralis Harle
(86) Numéro de dépôt international: PCT/EP2020/074461
(87) Numéro de publication internationale: WO 2021/043819

(56) Documents cités:
- TW-A- 201 412 488
- Dejan Milic ET AL: "Characterization of commercial thermoelectric modules for application in energy harvesting wireless sensor nodes", Applied Thermal Engineering 121 (2017) 74-82, 13 avril 2017 (2017-04-13), pages 74-82, XP055596764, The Netherlands DOI: 10.1016/j.applthermaleng.2017.04.037 Extrait de l'Internet: URL:https://doi.org/10.1016/j.applthermale ng.2017.04.037 [extrait le 2019-06-14]
- S. MAMASCHEW ET AL: "A Wireless Sensor for Ingot Mold Temperature Monitoring", PROCEEDINGS SENSOR 2011, 7 juin 2011 (2011-06-07), pages 381-385, XP055681321, DOI: 10.5162/sensor11/c1.4 ISBN: 978-3-9810993-9-3
- RUDD J M VULLERS ET AL: "Energy Harvesting for Autonomous Wireless Sensor Networks", IEEE SOLID-STATE CIRCUITS MAGAZINE, IEEE, USA, vol. 2, no. 2, 1 juin 2010 (2010-06-01), pages 29-38, XP011355247, ISSN: 1943-0582, DOI: 10.1109/MSSC.2010.936667
- Konatic: "Spyro by Konatic - Thermocouple and mold cooling close loop control", , 22 janvier 2020 (2020-01-22), pages 1-2, XP055680648, Extrait de l'Internet: URL:https://konatic.com/v3/wp-content/uplo ads/2020/01/spyro_janv20.pdf [extrait le 2020-03-30]

## Description

### Domaine technique auquel se rapporte l'invention

La présente invention concerne le domaine technique de la fabrication par formage de récipients en verre. La présente invention concerne plus particulièrement un dispositif sans fil, destiné à transmettre à un module de contrôle, les mesures réalisées par une sonde thermique placée sur/ou dans un moule utilisé pour le formage de récipients en verre.

### Arrière-plan technologique

La plupart des récipients en verre sont fabriqués par la technique du formage. Cette technique consiste à insérer une goutte de verre à une température de plus de 1 000°C dans un moule, puis souffler de l'air dans la goutte ou par pressage par un poinçon,afin que celle-ci se déforme et épouse les parois du moule, pour passer d'une forme cylindrique pleine à la forme définitive creuse. Pour cela, le verre est refroidi par le ou les moules pour passer d'un verre liquide visqueux dont la température est supérieure à 1 000 degrés, à un verre solide dont la température est inférieure à 600°C. Il est donc primordial de connaître précisément la température ou la distribution de température du moule lors du procédé de formage, afin de fabriquer des récipients en verre de qualité et de forme identique.

Pour mesurer la température à la surface d'un moule, il est connu de l'état de la technique l'utilisation de pyromètres à rayonnement infrarouge. Afin d'obtenir des mesures précises, l'opérateur doit s'approcher au plus près du moule. Cette technique est à la fois dangereuse et fastidieuse pour l'opérateur, en particulier lorsque l'opérateur doit surveiller plusieurs moules fonctionnant en même temps.

Pour offrir plus de confort à l'opérateur, une solution a été proposée par le document EP2511245A2, consistant à maintenir le pyromètre à l'extrémité d'un bras articulé. Le bras articulé est animé à l'aide de moyens robotisés, de manière à automatiser les mesures de température. Toutefois, cette solution n'est pas satisfaisante, car elle s'avère onéreuse et complexe à mettre en oeuvre.

Les pyromètres à rayonnement infrarouge ont pour inconvénient d'être très sensibles à l'état de surface de l'objet dont on souhaite connaître la température. Or, la rugosité de la surface d'un moule varie d'un moule à un autre et, pour un même moule, l'état de surface évolue souvent de façon soudaine lors d'un procédé de formage, notamment lorsqu'une couche de graisse est appliquée sur le moule. Au cours de son utilisation, la surface du moule est également recouverte par une couche de saleté. Ces différents phénomènes influencent de façon significative sur la précision des mesures de température réalisées par un pyromètre à rayonnement infrarouge. Pour obtenir des mesures suffisamment précises, il est nécessaire de nettoyer très fréquemment la surface des moules ce qui s'avère être fastidieux et coûteux.

Il est à noter que lors des phases de graissage des moules, les vapeurs de graisse empêchent la mesure de température avec un pyromètre. Un pyromètre à rayonnement infrarouge ne permet donc pas de mesurer en continu la température d'un moule.

Selon un autre inconvénient, l'agencement des moules dans les machines de formage ne permet pas d'observer toutes les faces des moules. De ce fait, les mesures de température à la surface d'un moule sont limitées aux uniques zones visibles lorsqu'on utilise un pyromètre à rayonnement infrarouge.

Le document BE788904A propose une alternative aux inconvénients précités, consistant à insérer dans le corps de chaque moule une sonde thermique. Les sondes thermiques sont reliées à un module de contrôle par l'intermédiaire d'un câblage électrique. Ainsi, un même opérateur peut surveiller simultanément et en temps réel, la température de plusieurs moules à partir du module de contrôle. Toutefois, cette solution présente l'inconvénient de devoir réaliser un câblage complexe entre les sondes thermiques et le module de contrôle, nécessitant l'arrêt complet de la chaine de production lors de son installation et son entretien. Cette solution est donc coûteuse à mettre en place et à entretenir. En effet, pour analyser la distribution de température dans le moule, il est nécessaire de réaliser un ou plusieurs points de mesure par moule. Les machines de formage pour le verre creux de type machine IS par exemple, sont généralement constituées de 32 à 60 moules, dont des moules constitués par deux demies coquilles, des moules de fond, des moules de bague.... Le nombre de points de mesures importants pour contrôler le procédé de formage, nécessite dès lors un câblage complexe et volumineux.

Une autre alternative décrite par le document JPH0812349, propose d'estimer la température d'un moule en mesurant la température de l'air s'écoulant le long du moule. La précision des mesures de température est relative en raison des nombreuses variables prises en compte et de la complexité des calculs mis en oeuvre par le procédé d'estimation.

Il convient également de mentionner dans ce contexte la solution proposée par Dejan Milic et al. consistant à alimenter en électricité un capteur sans fil grâce à un générateur thermoélectrique, voir Dejan Milic et al.: "Characterization of commercial thermoelectric modules for application in energy harvesting wireless sensor nodes", Applied Thermal Engineering 121, 13 avril 2017, pages 74-82, Pays-Bas.

L'invention vise à proposer une solution plus simple de mise en oeuvre et moins coûteuse d'entretien, pour transmettre à un module de contrôle les mesures réalisées par une sonde thermique logée dans le corps d'un moule employé pour le formage de contenants en verre.

### Objet de l'invention

Pour cela, l'invention propose un dispositif de transmission sans fil, destiné à transmettre des mesures réalisées par une sonde thermique, logée sur ou dans le corps d'un moule utilisé pour le formage d'un récipient ou contenant en verre.

L'invention se caractérise en ce que le dispositif de transmission sans fil comprend:
- une semelle comportant une face externe en vis-à-vis d'une face interne, la face externe de la semelle étant destinée à être en vis-à-vis d'une face extérieure d'un moule utilisé pour le formage d'un récipient en verre ; et
- un générateur thermoélectrique comprenant une face chaude opposée à une face froide, la face chaude étant positionnée en vis-à-vis de la face interne de la semelle ;
- un radiateur passif positionné en vis-à-vis de la face froide du générateur thermoélectrique ; et
- une via conductrice de chaleur reliant la face froide du générateur thermoélectrique au radiateur passif ; et
- un isolant thermique interposé entre la semelle et le radiateur passif, l'isolant thermique dépassant les contours du radiateur passif de manière à protéger ou sensiblement protéger, le radiateur passif d'un rayonnement infrarouge provenant d'une source de chaleur située devant de la face externe de la semelle; et
- un module de transmission sans fil, positionné en vis-à-vis de la face chaude du générateur thermoélectrique, le module de transmission sans fil étant alimenté par le générateur thermoélectrique, le module de transmission sans fil étant apte à être connecté à une sonde thermique et transmettre par ondes radio les mesures réalisées par la sonde thermique à un module de contrôle;
ledit dispositif étant caractérisé en ce que le radiateur passif comprend un corps creux et en ce que le module de transmission sans fil est logé dans le corps creux du radiateur passif.

En d'autres termes, l'invention permet la transmission de mesures réalisées par au moins une sonde thermique à un module de contrôle, sans qu'il soit pour cela nécessaire de mettre en oeuvre un câblage complexe et coûteux d'entretien, entre au moins une sonde thermique et le module de contrôle. De façon avantageuse, le dispositif de transmission sans fil comporte un générateur thermoélectrique lui permettant d'être autonome en énergie électrique, lorsque le dispositif de transmission est placé à proximité d'une source de chaleur, par exemple à la surface d'un moule utilisé pour le formage d'un contenant en verre. Selon un autre avantage, le dispositif de transmission sans fil comprend un isolant thermique, protégeant le radiateur passif d'un rayonnement infrarouge émis par une source de chaleur située devant la face externe de la semelle. On limite ainsi l'échauffement du radiateur passif de façon significative, afin que le radiateur passif puisse refroidir de façon efficace la surface froide du générateur thermoélectrique de manière à préserver son rendement.

Selon un autre mode de réalisation de l'invention, l'isolant thermique entoure le générateur thermoélectrique. Ce mode de réalisation permet avantageusement de limiter l'échauffement du générateur thermoélectrique, lorsque le dispositif de transmission sans fil est proche d'une source de chaleur.

Selon un autre mode de réalisation de l'invention, l'isolant thermique forme une gaine s'étendant le long d'un axe longitudinal qui est perpendiculaire ou sensiblement perpendiculaire à la face externe de la semelle, les extrémités opposées de la gaine sont obturées par la semelle et le radiateur passif. En d'autres termes, le radiateur passif peut être maintenu à la semelle par l'intermédiaire de l'isolant thermique, afin d'éviter un échauffement excessif du radiateur thermique dû à un phénomène de conduction thermique de la chaleur émise par la semelle au radiateur thermique, par l'intermédiaire d'un élément maintenant ensemble ces éléments.

Selon un autre avantage, l'isolant thermique permet également d'éloigner le radiateur passif d'une source de chaleur, positionnée en vis-à-vis de la semelle. En d'autres termes, l'isolant thermique permet au radiateur passif de ne pas être présent dans les couches d'air les plus chaudes, présentes au niveau de la surface du moule. Ainsi, l'échauffement du radiateur passif par un phénomène de convection est limité. De préférence, entre la semelle et le radiateur passif, la longueur de l'isolant thermique définie selon une direction perpendiculaire ou sensiblement perpendiculaire à la face externe de la semelle, est comprise entre 1 cm et 5 cm, de préférence entre 2 cm et 3 cm.

Selon un autre mode de réalisation de l'invention, la via conductrice de chaleur passe dans la gaine formée par l'isolant thermique. Ce mode de réalisation préserve la via conductrice d'un échauffement, dû à un rayonnement infrarouge émis par une source de chaleur située à l'extérieur du dispositif de transmission sans fil. Selon une variante de réalisation, la via conductrice est noyée dans l'isolant thermique reliant la semelle au radiateur passif.

Selon l'invention revendiquée, au moins une partie du module de transmission sans fil est logé dans le radiateur passif. Ceci permet avantageusement d'éloigner le module de transmission d'une source de chaleur présente en vis-à-vis de la face externe de la semelle.

Selon un autre mode de réalisation de l'invention, le radiateur passif comprend des ailettes de refroidissement. Selon une variante de réalisation, les ailettes de refroidissement s'étendent le long ou sensiblement le long de l'axe longitudinal du dispositif de transmission sans fil.

Selon un autre mode de réalisation ne faisant pas partie de l'invention revendiquée, la semelle est configurée pour que la température de sa face interne soit inférieure à 125°C, lorsque la température de sa face externe est inférieure à 500°C. De préférence, la température de la face interne est inférieure à 125°C lorsque la température de la face externe est comprise entre 200°C et 400°C.

Selon un autre mode de réalisation ne faisant pas partie de l'invention revendiquée, la température à l'intérieur de la gaine est inférieure à 125°C, lorsque la température à l'extérieur de la gaine est comprise entre 200°C et 500°C.

Selon un autre mode de réalisation ne faisant pas partie de l'invention revendiquée, le module de transmission sans fil est logé dans la gaine, entre le générateur thermoélectrique et le radiateur passif. De préférence, la gaine est formée à partir d'un matériau perméable aux ondes radiofréquences émises par le module de transmission sans fil. Selon une variante de réalisation, le module de transmission sans fil est logé dans la gaine de sorte à être isolé thermiquement du radiateur passif, du générateur thermoélectrique et des parois internes de la gaine. Par exemple, le module de transmission sans fil peut être noyé dans un isolant électrique identique ou différent de la gaine.

Selon un autre mode de réalisation ne faisant pas partie de l'invention revendiquée, lorsque le module de transmission sans fil est logé dans la gaine, la via conductrice de chaleur est agencé de manière à limiter l'échauffement du module de transmission. À titre d'exemple, la via conductrice de chaleur est agencée le long d'une paroi de la gaine qui est opposée au module de transmission sans fil.

Selon un autre mode de réalisation de l'invention, la semelle dépasse les contours du générateur thermoélectrique de manière à protéger le générateur thermoélectrique d'un rayonnement infrarouge provenant d'une source de chaleur située devant la face externe de la semelle. Selon un mode de réalisation préféré, la semelle dépasse également les contours du radiateur passif, de manière à protéger le radiateur passif d'un rayonnement infrarouge provenant d'une source de chaleur située devant la face externe de la semelle.

Selon un autre mode de réalisation de l'invention, la semelle est réalisée à partir d'un matériau ferromagnétique.

Selon un autre mode de réalisation de l'invention, le long de l'axe longitudinal de la gaine, la longueur du dispositif de transmission sans fil est comprise entre 2 cm et 10 cm, de préférence entre 3 cm et 5 cm. La longueur du dispositif de transmission sans fil peut ainsi être adaptée à l'environnement d'un moule, afin de ne pas gêner les mouvements mécaniques d'ouverture et de fermeture du moule lors d'un procédé de formage.

Selon une variante de réalisation, le générateur thermoélectrique peut être substitué par un générateur piézoélectrique ou un générateur à mouvement mécanique. Le moule est ouvert et fermé à chaque cycle machine. Ce mouvement peut ainsi être converti en électricité par ces types de générateurs. Ce mode de réalisation permet avantageusement de réduire l'encombrement du dispositif de transmission, en retirant le radiateur passif du dispositif de transmission sans fil.

Selon une variante de réalisation, le générateur thermoélectrique peut être substitué par un générateur comprenant une antenne de réception radio et un convertisseur permettant d'alimenter le système. Cette variante de réalisation permet avantageusement d'alimenter le module de transmission sans fil, lorsque l'environnement n'offre pas de condition suffisante pour permettre le fonction d'un générateur thermoélectrique.

Selon une autre variante de réalisation, le générateur thermoélectrique peut être substitué par un récepteur photovoltaïque apte à être éclairé par une source lumineuse de type LED Laser ou LED infrarouge, connecté à un convertisseur permettant d'alimenter électriquement le module de transmission sans fil.

De façon avantageuse, l'emploi d'un générateur thermoélectrique, d'un générateur à mouvement mécanique, d'un générateur comprenant une antenne de réception radio ou d'un récepteur photovoltaïque, permet de se passer de l'utilisation d'une batterie pour alimenter électriquement le module de transmission sans fil. De façon connue, les batteries ont une durée d'utilisation limitée dans le temps, bien inférieure aux générateurs mentionnés ci-dessus. Ainsi, de façon avantageuse, le dispositif de transmission sans fil selon l'invention nécessite moins d'entretien qu'un dispositif similaire alimenté par une batterie. Les batteries ont également l'inconvénient de fonctionner dans des plages de températures nettement plus restreintes que les générateurs mentionnés ci-dessus. Les batteries présentent également un risque d'explosion en cas de dysfonctionnement, ce qui n'est pas le cas des générateurs mentionnés ci-dessus. Afin de prolonger leur durée de vie, il est d'usage d'utiliser les batteries de façon périodique. À l'inverse, les générateurs mentionnés ci-dessus permettent une alimentation du module de transmission sans fil a plus haute fréquence ou en continu, ce qui permet de réaliser des mesures de température à plus haute fréquence ou de façon continue.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également, un dispositif de mesure à distance de la température d'un moule utilisé pour le formage d'un contenant en verre, comprenant un dispositif de transmission sans fil tel que décrit ci-dessus, le module de transmission sans fil étant connecté à une ou plusieurs sondes thermiques.

Selon une variante de réalisation, la sonde thermique comprend une tige destinée à être insérée dans un logement ménagé dans un moule utilisé pour le formage d'un récipient en verre.

Selon une variante de réalisation, la tige est maintenue à la semelle du dispositif de transmission sans fil.

Selon une variante de réalisation, la tige s'étend selon une direction perpendiculaire ou sensiblement perpendiculaire à la face externe de la semelle. Ce mode de réalisation permet avantageusement de maintenir à distance, le dispositif de transmission sans fil de la surface d'un moule, tout en permettant son fonctionnement par la chaleur dégagée par le moule. La chaleur est transmise au dispositif de transmission sans fil par conduction thermique à travers la tige. Ce mode de réalisation est particulièrement avantageux lorsque la température de la surface du moule est supérieure aux températures normales d'utilisation de la semelle, mentionnées ci-dessus.

Selon une variante de réalisation, la tige peut être creuse et comprendre un ou plusieurs thermocouples logés dans la tige creuse, de manière à pouvoir mesurer plusieurs zones de températures.

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
[Fig. 1] illustre une coupe longitudinale d'un premier mode de réalisation d'un dispositif de transmission sans fil selon l'invention, destiné à transmettre des mesures réalisées par une sonde thermique logée dans le corps d'un moule utilisé pour le formage d'un récipient en verre ;
[Fig. 2] illustre une vue de dessus du dispositif de transmission sans fil représenté sur la figure 1;
[Fig. 3] illustre une vue de dessous du dispositif de transmission sans fil représenté sur la figure 1;
[Fig. 4] illustre une coupe longitudinale d'un deuxième mode de réalisation d'un dispositif de transmission sans fil selon l'invention, destiné à transmettre des mesures réalisées par une sonde thermique logée dans le corps d'un moule utilisé pour le formage d'un récipient en verre ;
[Fig. 5] illustre une coupe longitudinale d'un troisième mode de réalisation d'un dispositif de transmission sans fil ne correspondant pas à l'invention revendiquée, destiné à transmettre des mesures réalisées par une sonde thermique logée dans le corps d'un moule utilisé pour le formage d'un récipient en verre ;
[Fig. 6] illustre une coupe longitudinale d'un premier mode de réalisation d'un dispositif de mesure à distance de la température d'un moule utilisé pour le formage d'un récipient en verre ;
[Fig. 7] illustre une coupe longitudinale d'une coque d'un moule pour le formage d'un contenant en verre, comprenant une cavité dans laquelle est insérée une sonde thermique connectée à un dispositif de transmission sans fil selon l'invention.

### Description détaillée de l'invention

Pour rappel, l'invention propose une solution simple et moins coûteuse pour transmettre à un module de contrôle, des mesures réalisées par une sonde thermique logée dans le corps d'un moule employé pour le formage de contenants en verre.

Pour cela, l'invention propose l'utilisation d'un dispositif de transmission sans fil, apte à transmettre à un module de contrôle les mesures réalisées par une sonde thermique.

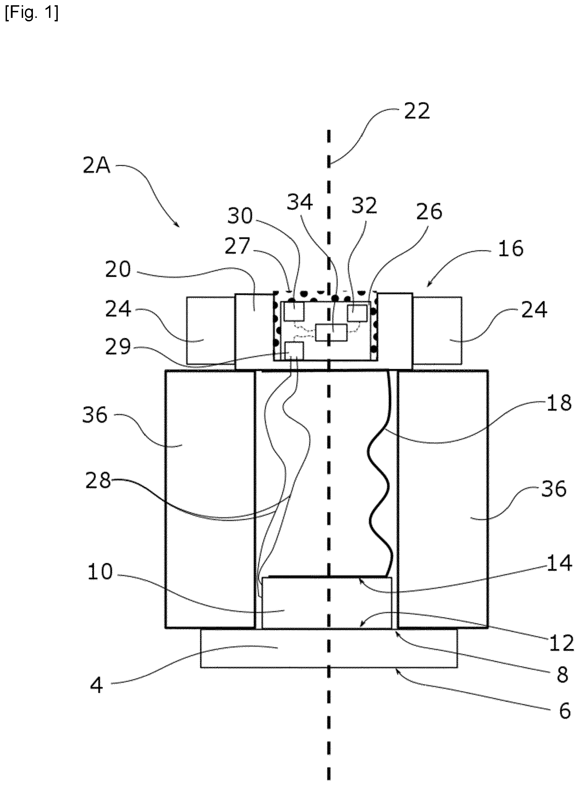

La figure 1 illustre un premier exemple de réalisation non limitatif d'un dispositif de transmission sans fil 2A selon l'invention. Le dispositif de transmission sans fil 2A comprend une semelle 4 délimitée par une face externe 6 et une face interne 8. Selon le présent exemple, les faces externe et interne sont planes et parallèles entre elles. La semelle est réalisée à partir d'un isolant thermique de sorte que la température de la face interne 8 est égale ou inférieure à 125°C, lorsque la température de la face externe 6 est égale ou inférieure à 300°C, de préférence lorsque la température de la face externe 6 est comprise de 200°C à 300°C.

La semelle 4 est réalisée à partir d'un matériau conducteur de chaleur. La semelle peut être réalisée à partir d'un acier inoxydable. L'épaisseur de la semelle, définie comme la plus petite distance entre sa face externe 6 et sa face interne 8, est comprise de 1 mm à 10 mm de préférence de 2 mm à 4 mm.

Selon une variante de réalisation, la semelle 4 peut être réalisée à partir d'un matériau faiblement conducteur, par exemple à partir d'une céramique à base de calcium silicate ou d'un plastique haute température à bas de polyimide. La semelle a une conductivité thermique inférieure à 1 W.m⁻¹.K⁻¹, de façon à limiter la température au niveau de sa face interne 8. L'épaisseur de la semelle peut alors être de 1 mm à 5 mm ,de préférence de l'ordre de 2 mm.

Le dispositif de transmission sans fil 2A comporte un générateur thermoélectrique 10, de type module Peltier, dont la face chaude 12 est maintenue contre la face interne 8 de la semelle par l'intermédiaire de moyens connus, par exemple à l'aide d'une colle thermique. Les dimensions du générateur thermoélectrique 10 sont choisies pour que le générateur thermoélectrique ne dépasse pas de la semelle 4. En d'autres termes, la semelle 4 est plus grande que le générateur thermoélectrique 10 afin de le protéger d'un rayonnement infrarouge provenant d'une source de chaleur située devant la face externe 6 de la semelle. Le générateur thermoélectrique 10 est apte à générer un courant électrique de l'ordre de 20 mA, lorsque la différence de température entre sa face chaude 12 et sa face froide 14 est de l'ordre de 50°C. La face froide 14 du générateur thermoélectrique est reliée à un radiateur passif 16 par l'intermédiaire d'une via conductrice 18 de chaleur. Selon le présent exemple, la via conductrice 18 comprend une bande métallique dont la conductivité thermique est comprise entre 50 W.m⁻¹.K⁻¹ et 500W.m⁻¹.K⁻¹ , de préférence entre 200 W.m⁻¹.K⁻¹ et 400W.m⁻¹.K⁻¹. À titre d'exemples non limitatifs, la via conductrice 18 peut être réalisée à partir d'aluminium et/ou de cuivre.

Le radiateur passif 16 est positionné en vis-à-vis de la face froide 14 du générateur thermoélectrique 10, à une distance comprise entre 2 cm et 3 cm. Le radiateur passif 16 comprend un corps creux 20 de forme cylindrique, s'étendant le long d'un axe longitudinal 22, normal ou sensiblement normal à la face externe 6 de la semelle 4. Le diamètre interne du corps creux 20 est compris entre 1 cm et 3 cm. Le radiateur passif 16 comporte plusieurs ailettes de refroidissement 24 qui s'étendent radialement depuis l'extérieur du corps creux. Les extrémités libres des ailettes de refroidissement délimitent le contour du radiateur passif 16 dans un plan normal ou sensiblement normal à l'axe longitudinal 22. Selon le présent exemple, le radiateur passif 16 est de forme cylindrique et sa longueur, définie selon l'axe longitudinal 22, est comprise entre 2 cm et 5 cm, de manière à ne pas dépasser le diamètre extérieur du corps creux. Il est à noter que l'invention ne se limite pas à ce seul mode de réalisation, la forme du radiateur passif pourrait être différente.

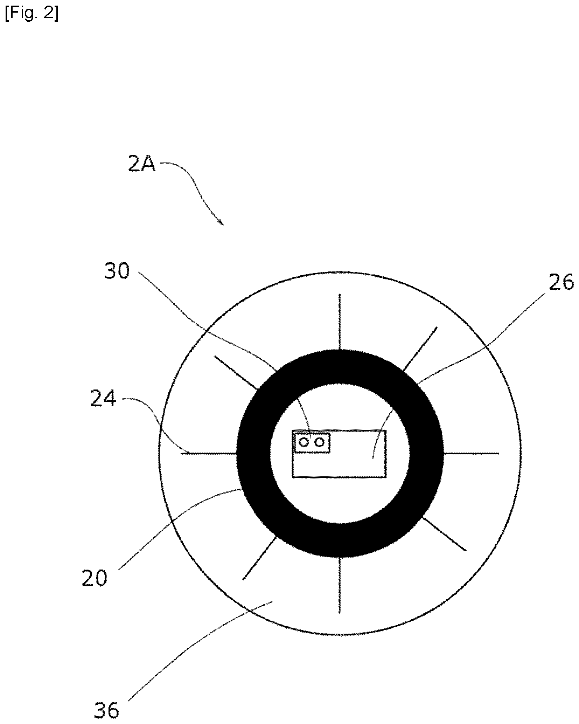

Comme illustré par les figures 1 et 2, le dispositif de transmission sans fil 2A comprend un module de transmission sans fil 26 logé dans le corps creux 20 du radiateur passif 16. Afin de protéger le module de transmission sans fil d'un échauffement excessif dû à l'environnement, le module de transmission sans fil est noyé dans un isolant thermique 27. L'isolant thermique 27 comble de préférence le corps creux comme illustré sur la figure 2. L'isolant thermique 27 et le module de transmission sans fil 26 sont agencés de sorte que la température du module de transmission sans fil est égale ou inférieure à 125°C, lorsque la température ambiante est inférieure à 500°C. Le module de transmission sans fil 26 est alimenté électriquement par le générateur thermoélectrique 10 par l'intermédiaire de fils électriquement conducteurs 28. Le module de transmission sans fil 26 comprend une unité de stockage 29 du courant électrique délivré par le générateur thermoélectrique 10, un module de connexion 30 à une sonde thermique, une unité de transmission 32 sans fil des mesures réalisées par une sonde thermique à un module de contrôle (non représenté) et une unité centrale 34 permettant le paramétrage et l'automatisation de la transmission des mesures réalisées par une sonde thermique à un module de contrôle.

Selon le présent exemple, l'unité de transmission 32 est apte à transmettre une information par l'intermédiaire d'une onde radio dont la fréquence est inférieure à 2,5 GHz, de préférence compris entre 800 MHz et 2,2 GHz. L'unité de transmission 32 est apte à émettre une information à un module de contrôle distant, selon le protocole de communication 802.15.4 défini par l'Institut des Ingénieurs Électriciens et Électroniciens (IEEE). Selon un mode de réalisation préféré, l'unité de transmission 32 est apte à transmettre à un module de contrôle une information selon le protocole "ZigBee".

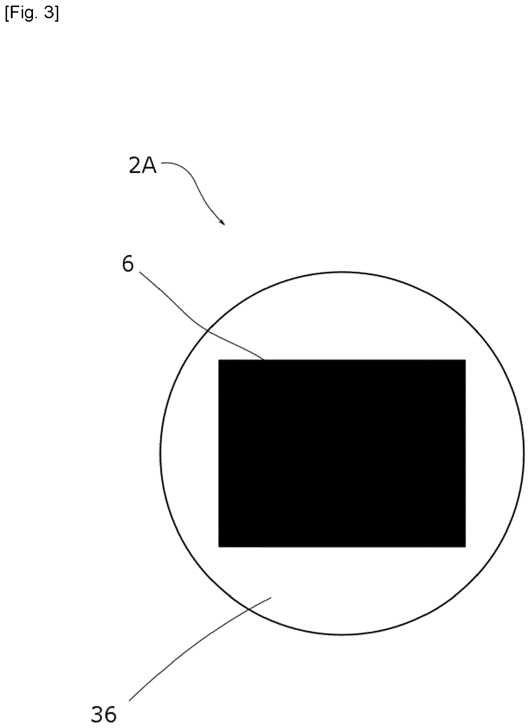

De façon avantageuse, le dispositif de transmission sans fil 2A comprend un isolant thermique 36 interposé entre la semelle 4 et le radiateur passif 16. Comme illustré par la figure 3, l'isolant thermique 36 est agencé de manière à ce que le radiateur passif 16 ne soit pas visible pour un observateur regardant le centre de la face externe 6 de la semelle selon une direction normale à ladite face externe. En d'autres termes, l'isolant thermique 36 est agencé de sorte à masquer les contours du radiateur passif 16 à l'observateur. Ce mode de réalisation permet avantageusement à l'isolant thermique 36 de protéger le radiateur passif 16 d'un rayonnement infrarouge émis par une source de chaleur positionnée en vis-à-vis de la face externe 6 de la semelle 4. On limite ainsi l'échauffement du radiateur passif 16 par ce type de rayonnement, afin de permettre un refroidissement plus efficace de la face froide 14 du générateur thermoélectrique 10 et ainsi améliorer le rendement du générateur thermoélectrique. De préférence, la conductivité thermique de l'isolant thermique 36 est inférieure à 1 W.m⁻¹.K⁻¹, de préférence inférieure à 0,3W.m⁻¹.K⁻¹. L'isolant thermique 36 peut être réalisé à partir d'un matériau céramique et/ou d'un matériau thermoplastique à base de polyetheretherketone (PEEK).

Selon le présent exemple de réalisation, l'isolant thermique a la forme d'un cylindre creux, dont l'axe de révolution est aligné sur l'axe longitudinal 22 (voir figure 1). L'intérieur du cylindre creux est dimensionné pour permettre le passage de la via conductrice 18 ainsi que l'insertion du générateur thermoélectrique 10. Comme illustré par les figures 1 à 3, les extrémités du cylindre creux sont obturées par la semelle 4 et le radiateur passif 16. Comme illustré par la figure 2, le diamètre externe du cylindre creux est supérieur au diamètre externe du radiateur passif. De préférence, le diamètre externe du cylindre creux est supérieur au diamètre externe du radiateur passif 16. La longueur du cylindre creux, définie selon l'axe longitudinal 22, est choisie de manière à limiter l'échauffement du radiateur passif par une source de chaleur placée en vis-à-vis de la face externe 6 de la semelle, par un phénomène de convection thermique. Ainsi, de façon avantageuse, l'isolant thermique permet au radiateur passif de ne pas être présent dans les couches d'air les plus chaudes, présentes au niveau de la surface du moule. Selon le présent exemple, la longueur du cylindre creux est comprise entre 1 cm et 5 cm, de préférence entre 2 cm et 3 cm.

Il est à noter que l'invention ne se limite pas à ce seul mode de réalisation de sorte que la forme de l'isolant thermique 36 peut être cubique ou autre, à la condition de masquer le radiateur passif 16 comme décrit ci-dessus.

La figure 1 illustre ainsi un premier mode de réalisation d'un dispositif de transmission sans fil 2A, des données mesurées par une sonde thermique à un module de contrôle, adapté pour fonctionner de façon autonome et au plus proche d'une surface chaude, comme une paroi d'un moule utilisé pour le formage d'un contenant en verre. Grâce à l'invention, il n'est ainsi plus nécessaire de relier la sonde thermique à un module de contrôle, par un système de câblages complexe à mettre en oeuvre et coûteux à entretenir.

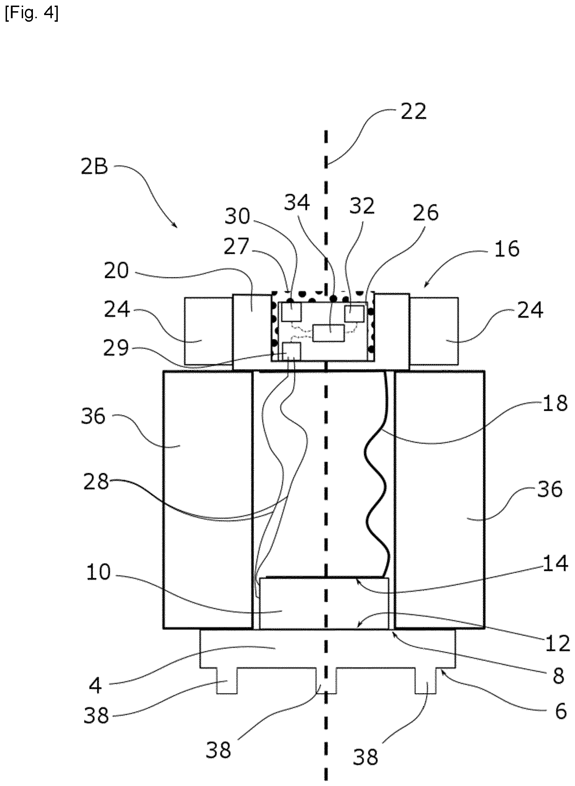

La figure 4 illustre à présent un deuxième mode de réalisation non limitatif d'un dispositif de transmission sans fil 2B selon l'invention. Les éléments identiques ou similaires entre les différents exemples de réalisation de l'invention sont identifiés par les mêmes références sur les figures annexées. Le dispositif de transmission sans fil 2B se distingue du dispositif de transmission sans fil 2A décrit ci-dessus, en ce que la semelle 4 comprend des excroissances 38 sur sa face externe 6. Ces excroissances 38 sont configurées pour prendre appui contre une surface chaude, de manière à limiter la surface de contact entre la semelle 4 et la surface chaude, afin de réduire l'échauffement de la semelle par ladite surface chaude.

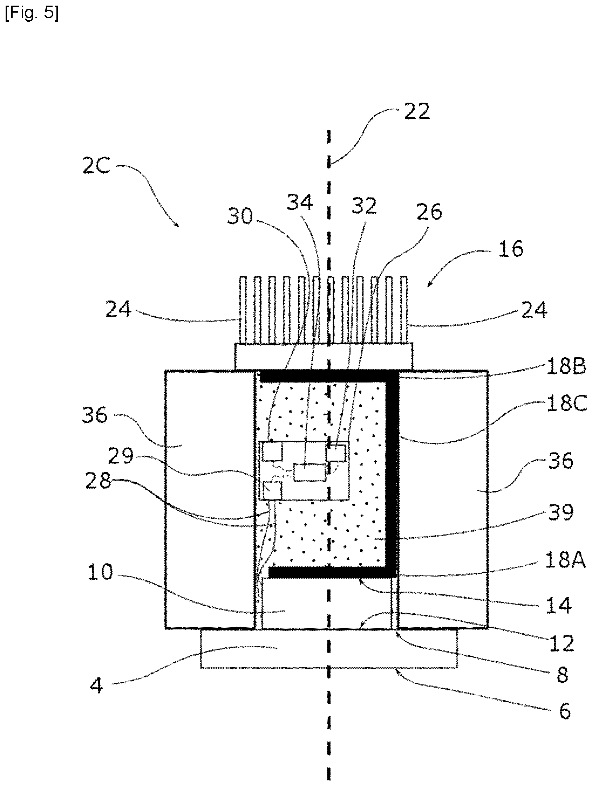

La figure 5 illustre un troisième mode de réalisation d'un dispositif de transmission sans fil 2C ne correspondant pas à l'invention revendiquée. Le dispositif de transmission sans fil 2C se distingue du premier mode de réalisation du dispositif de transmission sans fil 2A, en ce que le module de transmission sans fil 26 est inséré dans le cylindre creux formé par l'isolant thermique 36. Plus précisément, le module de transmission sans fil 26 est interposé entre le générateur thermoélectrique 10 et le radiateur passif 16. Le module de transmission sans fil 26 est noyé dans un isolant thermique 39. La nature de l'isolant thermique 39 est identique ou différente de l'isolant thermique 36 constituant le cylindre creux. Selon le présent exemple, les isolants thermiques sont perméables aux ondes radio fréquences émises par le module de transmission sans fil 26.

La via conductrice de chaleur est agencée de manière à prévenir d'un échauffement excessif du module de transmission sans fil 26, par la chaleur se propageant dans ladite via. Comme illustré par la figure 5, la via conductrice comportent un premier segment 18A en contact avec la face froide 14 du générateur thermoélectrique 10, un deuxième segment 18B en contact avec le radiateur passif 16 et un troisième segment 18C reliant les précédents segments. Le troisième segment 18C est agencé le long d'une paroi interne du cylindre, de manière à espacer le plus possible ce troisième segment du module de transmission sans fil 26, afin de limiter l'échauffement du module de transmission sans fil par ledit segment. Selon le présent exemple, la via conductrice est réalisée à base de cuivre. Le premier et deuxième segment ont une épaisseur, mesurée le long de l'axe longitudinal 22, comprise de 2 à 4 mm. L'épaisseur du troisième segment, mesurée selon une direction normale à l'axe longitudinal 22, est de l'ordre de 8 mm. Le premier et deuxième segments sont distant de l'ordre 36 mm. Bien entendu, l'invention ne se limite pas à ce seul mode de réalisation de la via conductrice.

De préférence, l'épaisseur de la paroi de la gaine est configurée pour que la température à l'intérieur de la gaine soit inférieure à 125°C, lorsque la température à la surface du moule est comprise entre 300°C et 500°C. Ainsi, on permet un fonctionnement du module de transmission sans fil dans une plage d'utilisation normale. Ce mode de réalisation permet également un meilleur refroidissement du radiateur passif tout en permettant une meilleure protection du module de transmission sans fil des chocs mécaniques.

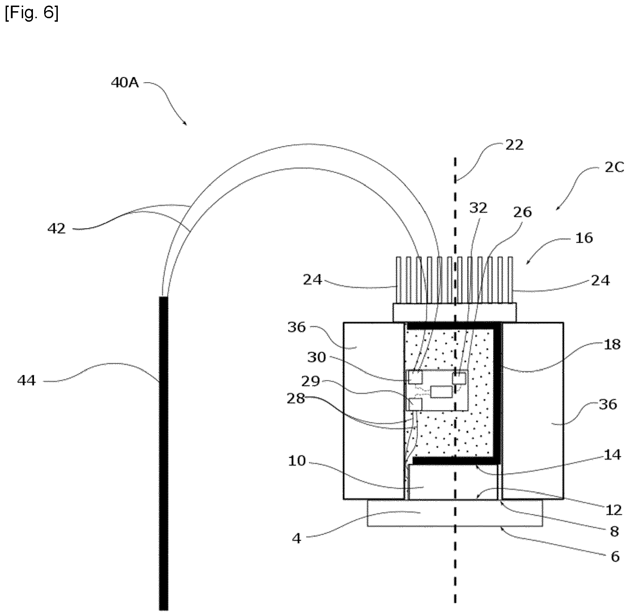

Comme mentionné ci-dessus, l'invention concerne également un dispositif de mesure à distance de la température d'un moule pour le formage. La figure 6 illustre un premier exemple d'un dispositif de mesure à distance de la température 40A selon l'invention, comprenant un dispositif de transmission sans fil 2C tel que décrit ci-dessus, dont le module de connexion 30 est relié par des moyens de connexion 42 à une sonde thermique 44. La sonde thermique 44 comprend une tige métallique en inox, apte à être insérée dans un logement ménagé dans un moule pour le formage d'un contenant en verre. De préférence, les moyens de connexion 42 sont souples pour permettre de positionner aisément la semelle 4 du dispositif de transmission sans fil 2A, en vis-à-vis de la face d'un moule dans lequel est insérée la sonde thermique 44.

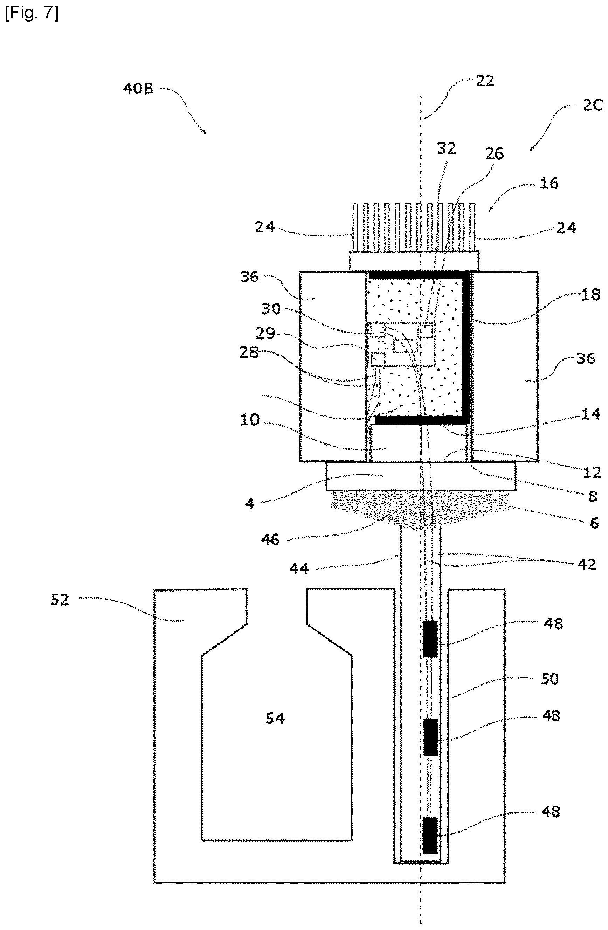

La figure 7 illustre un deuxième mode de réalisation d'un dispositif de mesure à distance de la température 40B d'un moule pour le formage. Ce deuxième mode de réalisation se distingue du précédent en ce que la face externe 6 du dispositif de transmission sans fil 2B est maintenue à une extrémité de la sonde thermique 44, par une pièce intermédiaire 46. Selon le présent exemple, la sonde thermique est une tige creuse réalisée en inox. Trois thermocouples 48 sont présents dans la tige creuse. Chaque thermocouple 48 est connecté au dispositif de transmission sans fil 2C par l'intermédiaire des éléments conducteurs 42. La sonde thermique est insérée dans une cavité 50, ménagée dans une coquille d'un moule 52 comprenant en son centre une empreinte 54 de contenant en verre à réaliser par formage. La cavité 50 s'étend le long de l'empreinte 54 du moule, à une distance de l'ordre de 1 cm et le diamètre de la cavité est de l'ordre de 3 mm.

Ce mode de réalisation permet avantageusement de faciliter la mise en place du dispositif de transmission sans fil à distance pour éviter des interférences mécaniques avec des éléments mécaniques actionnant le moule. Selon un autre avantage, ce mode de réalisation permet de réduire l'encombrement de la surface du moule par le dispositif de mesure. Selon un autre avantage, ce mode de réalisation permet également de protéger le dispositif de transmission sans fil, en limitant son échauffement par le moule.

## Revendications

1. Dispositif de transmission sans fil (2A, 2B, 2C), destiné à transmettre des mesures réalisées par une sonde thermique (44) logée sur ou dans le corps d'un moule utilisé pour le formage d'un récipient en verre, comprenant:
- une semelle (4) comportant une face externe (6) en vis-à-vis d'une face interne (8), la face externe (6) de la semelle (4) étant destinée à être en vis-à-vis d'une face extérieure d'un moule utilisé pour le formage d'un récipient en verre ; et
- un générateur thermoélectrique (10) comprenant une face chaude (12) opposée à une face froide (14), la face chaude (12) étant positionnée en vis-à-vis de la face interne (8) de la semelle (4) ; et
- un radiateur passif (16) positionné en vis-à-vis de la face froide (14) du générateur thermoélectrique (10) ; et
- une via conductrice (18) de chaleur reliant la face froide (14) du générateur thermoélectrique (10) au radiateur passif (16) ; et
- un isolant thermique (36) interposé entre la semelle (4) et le radiateur passif (16), l'isolant thermique (36) dépassant les contours du radiateur passif (16) de manière à protéger ou sensiblement protéger le radiateur passif (16) d'un rayonnement infrarouge provenant d'une source de chaleur située devant la face externe (6) de la semelle (4) ; et
- un module de transmission sans fil (26) positionné en vis-à-vis de la face chaude (12) du générateur thermoélectrique (10), le module de transmission sans fil (26) étant alimenté par le générateur thermoélectrique (10), le module de transmission sans fil (26) étant apte à être connecté à une sonde thermique (44) et transmettre par ondes radio les mesures réalisées par la sonde thermique (44) à un module de contrôle;
**caractérisé en ce que** le radiateur passif (16) comprend un corps creux (20) et **en ce que** le module de transmission sans fil (26) est logé dans le corps creux (20) du radiateur passif (16).

2. Dispositif de transmission sans fil (2A, 2B, 2C) selon la revendication 1, **caractérisé en ce que** l'isolant thermique (36) entoure le générateur thermoélectrique (10).

3. Dispositif de transmission sans fil (2A, 2B, 2C) selon la revendication 1 ou 2, **caractérisé en ce que** l'isolant thermique (36) forme une gaine s'étendant le long d'un axe longitudinal (22), perpendiculaire ou sensiblement perpendiculaire à la face externe (6) de la semelle (4), les extrémités opposées de la gaine étant obturées par la semelle (4) et le radiateur passif (16).

4. Dispositif de transmission sans fil (2A, 2B, 2C) selon la revendication 3, **caractérisé en ce que** la via conductrice (18) de chaleur passe dans la gaine formée par l'isolant thermique (36).

5. Dispositif de transmission sans fil (2A, 2B, 2C) selon l'une des revendications 1 à 4, **caractérisé en ce que** le radiateur passif (16) comprend des ailettes de refroidissement (24).

6. Dispositif de transmission sans fil (2A, 2B, 2C) selon l'une des revendications 1 à 5, **caractérisé en ce que** la semelle (4) dépasse les contours du générateur thermoélectrique (10) de manière à protéger le générateur thermoélectrique (10) d'un rayonnement infrarouge provenant d'une source de chaleur située devant la face externe (6) de la semelle (4).

7. Dispositif de transmission sans fil (2A, 2B, 2C) selon l'une des revendications 3 à 2. 6, **caractérisé en ce que** le long de l'axe longitudinal (22) de la gaine, la longueur du dispositif de transmission sans fil (2A, 2B, 2C) est comprise entre 2 cm et 10 cm.

8. Dispositif de mesure à distance de la température (40A, 40B) d'un moule utilisé pour le formage d'un contenant en verre, **caractérisé en ce qu'**il comprend un dispositif de transmission sans fil (2A, 2B, 2C) selon l'une des revendications 1 à 7 et **en ce que** le module de transmission sans fil (26) est connecté à une sonde thermique (44).

9. Dispositif de mesure à distance de la température (40A, 40B) selon la revendication 8, **caractérisé en ce que** la sonde thermique (44) comprend une tige destinée à être insérée dans un logement ménagé dans un moule utilisé pour le formage d'un récipient en verre.

10. Dispositif de mesure à distance de la température (40B) selon la revendication 9, **caractérisé en ce que** la tige est maintenue à la semelle (4) du dispositif de transmission sans fil (2A, 2B, 2C).

11. Dispositif de mesure à distance de la température (40A, 40B) selon la revendication 10, **caractérisé en ce que** la tige s'étend selon une direction perpendiculaire ou sensiblement perpendiculaire à la face externe (6) de la semelle (4).

## Patentansprüche

1. Vorrichtung zur drahtlosen Übertragung (2A, 2B, 2C), die dazu bestimmt ist, mit einem auf einer oder in einer zum Formen eines Behälters aus Glas verwendeten Form angebrachten Temperatursensor (44) gemessene Werte zu übertragen, mit
- einer Grundplatte (4), die eine einer Innenseite (8) gegenüberliegende Außenseite (6) aufweist, wobei die Außenseite (6) der Grundplatte (4) dazu bestimmt ist, einer Außenseite einer für das Formen eines Behälters aus Glas verwendeten Form gegenüberzuliegen, und
- einem thermoelektrischen Generator (10), der eine von einer kalten Seite (14) abgewandte heiße Seite (12) aufweist, wobei die heiße Seite (12) gegenüber der Innenseite (8) der Grundplatte (4) positioniert ist, und
- einem passiven Strahler (16), der gegenüber der kalten Seite (14) des thermoelektrischen Generators (10) positioniert ist, und
- einer wärmeleitfähigen Durchgangsverbindung (18), die die kalte Seite (14) des thermoelektrischen Generators (10) mit dem passiven Strahler verbindet, und
- einem zwischen der Grundplatte (4) und dem passiven Strahler (16) eingefügten Wärmeisolator (36), wobei der Wärmeisolator (36) über die Konturen des passiven Strahlers (16) übersteht, um den passiven Strahler vor einer von einer vor der Außenseite (6) der Grundplatte (4) befindlichen Wärmequelle kommenden Infrarotstrahlung zu schützen oder im Wesentlichen zu schützen, und
- einem gegenüber der heißen Seite (12) des thermoelektrischen Generators (10) positionierten Modul (26) zur drahtlosen Übertragung, wobei das Modul (26) zur drahtlosen Übertragung vom thermoelektrischen Generator (10) versorgt wird, wobei das Modul (26) zur drahtlosen Übertragung geeignet ist, an einen Thermosensor (44) angeschlossen zu werden und die mit dem Thermosensor (44) gemachten Messungen an ein Steuermodul zu übertragen,
**dadurch gekennzeichnet, daß**, der passive Strahler (16) einen Hohlkörper (20) aufweist und daß das Modul (26) zur drahtlosen Übertragung im Hohlkörper (20) des passiven Strahlers (16) untergebracht ist.

2. Vorrichtung zur drahtlosen Übertragung (2A, 2B, 2C) gemäß Anspruch 1, **dadurch gekennzeichnet, daß** der Wärmeisolator (36) den thermoelektrischen Generator (10) umgibt.

3. Vorrichtung zur drahtlosen Übertragung (2A, 2B, 2C) gemäß Anspruch 1 oder 2, **dadurch gekennzeichnet, daß** der Wärmeisolator (36) eine Hülle bildet, die sich entlang einer Längsachse (22), senkrecht oder im Wesentlichen senkrecht zur Außenseite (6) der Grundplatte (4) erstreckt, wobei die entgegengesetzten Enden der Hülle durch die Grundplatte (4) und den passiven Strahler (16) verschlossen sind.

4. Vorrichtung zur drahtlosen Übertragung (2A, 2B, 2C) gemäß Anspruch 3, **dadurch gekennzeichnet, daß** die wärmeleitfähige Durchgangsverbindung (18) in der durch den Wärmeisolator (36) gebildeten Hülle verläuft.

5. Vorrichtung zur drahtlosen Übertragung (2A, 2B, 2C) gemäß einem der Ansprüche 1 bis 4, **dadurch gekennzeichnet, daß** der passive Strahler (16) Kühlrippen (24) aufweist.

6. Vorrichtung zur drahtlosen Übertragung (2A, 2B, 2C) gemäß einem der Ansprüche 1 bis 5, **dadurch gekennzeichnet, daß** die Grundplatte (4) über die Konturen des thermoelektrischen Generators (10) übersteht, um den thermoelektrischen Generator (10) vor einer von einer vor der Außenseite (6) der Grundplatte (4) befindlichen Wärmequelle kommenden Infrarotstrahlung zu schützen.

7. Vorrichtung zur drahtlosen Übertragung (2A, 2B, 2C) gemäß einem der Ansprüche 3 bis 6, **dadurch gekennzeichnet, daß** die Länge der Vorrichtung zur drahtlosen Übertragung (2A, 2B, 2C) entlang der Längsachse (22) der Hülle zwischen 2 cm und 10 cm beträgt.

8. Vorrichtung (40A, 40B) zum Fernmessen der Temperatur einer zum Formen eines Behälters aus Glas verwendeten Form, **dadurch gekennzeichnet, daß** sie eine Vorrichtung zur drahtlosen Übertragung (2A, 2B, 2C) gemäß einem der Ansprüche 1 bis 7 aufweist und daß das Modul zur drahtlosen Übertragung (26) mit einem Temperatursensor verbunden ist.

9. Temperaturfernmeßvorrichtung (40A, 40B) gemäß Anspruch 8, **dadurch gekennzeichnet, daß** der Temperatursensor (44) einen Stab aufweist, der dazu bestimmt ist, in einen in einer für das Formen eines Behälters aus Glas verwendeten Form ausgebildeten Aufnahmeraum eingeführt zu werden.

10. Temperaturfernmeßvorrichtung (40A, 40B) gemäß Anspruch 9, **dadurch gekennzeichnet, daß** der Stab an der Grundplatte (4) der Vorrichtung zur drahtlosen Übertragung (2A, 2B, 2C) festgehalten wird.

11. Temperaturfernmeßvorrichtung (40A, 40B) gemäß Anspruch 10, **dadurch gekennzeichnet, daß** sich der Stab in einer zur Außenseite (6) der Grundplatte (4) senkrechten oder im Wesentlichen senkrechten Richtung erstreckt.

## Claims

1. A wireless transmission device (2A, 2B, 2C), intended to transmit measurements taken by a thermal probe (44) housed on or in the body of a mould used to form a glass container, comprising
- a base plate (4) having an external side (6) opposite to an internal side (8), the external side (6) of the base plate (4) being intended to face an external side of a mould used to form a glass container; and
- a thermoelectric generator (10) comprising a hot side (12) opposite to a cold side (14), the hot side (12) being positioned facing the inner side (8) of the base plate (4); and
- a passive radiator (16) positioned facing the cold side (14) of the thermoelectric generator (10); and
- a heat-conducting via (18) connecting the cold side (14) of the thermoelectric generator (10) to the passive radiator (16) and
- a thermal insulator (36) interposed between the base plate (4) and the passive radiator (16), the thermal insulator (36) extending beyond the contours of the passive radiator (16) in such a way as to protect or substantially protect the passive radiator (16) from an infrared radiation coming from a source of heat located in front of the external side (6) of the base plate (4); and
- a wireless transmission module (26) positioned opposite the hot side (12) of the thermoelectric generator (10), the wireless transmission module (26) being powered by the thermoelectric generator (10), the wireless transmission module (26) being adapted to be connected to a thermal probe (44) and to transmit the measurements taken by the thermal probe (44) to a control module via radio waves;
**characterized in that** the passive radiator (16) comprises a hollow body (20) and **in that** the wireless transmission module (26) is housed inside the hollow body (20) of the passive radiator (16).

2. The wireless transmission device (2A, 2B, 2C) according to claim 1, **characterized in that** the thermal insulator (36) surrounds the thermoelectric generator (10).

3. The wireless transmission device (2A, 2B, 2C) according to claim 1 or 2, **characterized in that** the thermal insulator (36) forms a sheath extending along a longitudinal axis (22), perpendicular or substantially perpendicular to the external side (6) of the base plate (4), the opposite ends of the sheath being closed by the base plate (4) and the passive radiator (16).

4. The wireless transmission device (2A, 2B, 2C) according to claim 3, **characterized in that** the heat-conducting via (18) passes through the sheath formed by the thermal insulator (36).

5. The wireless transmission device (2A, 2B, 2C) according to one of claims 1 to 4, **characterized in that** the thermal insulator (16) comprises cooling fins (24).

6. The wireless transmission device (2A, 2B, 2C) according to one of claims 1 to 5, **characterized in that** the base plate (4) extends beyond the contours of the thermoelectric generator (10) in such a way as to protect the thermoelectric generator (10) from an infrared radiation coming from a source of heat located in front of the external side (6) of the base plate (4).

7. The wireless transmission device (2A, 2B, 2C) according to one of claims 3 to 6, **characterized in that**, along the longitudinal axis (22) of the sheath, the length of the wireless transmission device (2A, 2B, 2C) is between 2 cm and 10 cm.

8. A remote temperature measurement device (40A, 40B) for remotely measuring the temperature of a mould used to form a glass container, **characterized in that** it comprises a wireless transmission device (2A, 2B, 2C) according to one of claims 1 to 7 and **in that** the wireless transmission module (26) is connected to a thermal probe (44).

9. The remote temperature measurement device (40A, 40B) according to claim 8, **characterized in that** the thermal probe (44) comprises a rod intended to be inserted into a housing formed in a mould used to form a glass container.

10. The remote temperature measurement device (40A, 40B) according to claim 9, **characterized in that** the rod is maintained to the base plate (4) of the wireless transmission device (2A, 2B, 2C).

11. The remote temperature measurement device (40A, 40B) according to claim 10, **characterized in that** the rod extends along a direction perpendicular or substantially perpendicular to the external side (6) of the base plate (4).
